# EUROPEAN PATENT APPLICATION

(11) **EP 3 342 367 A1**
(43) Date of publication of application: **04.07.2018**
(21) Application number: 15902356.3
(22) Date of filing: 18.11.2015
(51) Int. Cl.: A61C 7/12, A61C 7/14

(54) **METHOD FOR MANUFACTURING CUSTOMIZED ORTHODONTIC SQUARE WIRE**

(30) Priority: 26.08.2015 KR 20150119979
(71) Applicant: Lee, Jong Ho, Pohang-si, Gyeongsangbuk-do 790-828 (KR)
(72) Inventor: Lee, Jong Ho, Pohang-si, Gyeongsangbuk-do 790-828 (KR)
(74) Representative: dompatent von Kreisler Selting Werner - Partnerschaft von Patent- und Rechtsanwälten mbB
(86) International application number: PCT/KR2015/012401
(87) International publication number: WO 2017/034084

(57) **Abstract**

A method for manufacturing a customized orthodontic square wire is disclosed. The present invention comprises: a step of generating a setup model in which teeth of a patient are rearranged to a normal position; a step of determining the position of a bracket on the setup model; a step of generating a reference line connecting slots of the determined bracket; a step of generating data for a cutting and grinding operation having a rectangular cross section by using the generated reference line; and a step of manufacturing a square wire by cutting a material using the data for the cutting operation of the generated reference line.

## Description

### [Technical Field]

The present invention relates to an orthodontic appliance manufacturing technology, and more particularly, to a customized orthodontic appliance manufacturing technology.

### [Background Art]

Orthodontic treatment means an act of medical treatment to make irregular teeth even. In general, orthodontics is carried out through the steps of attaching a bracket onto teeth and ligating an archwire for orthodontics so as to straighten malpositioned, inclined or misdirected teeth by a restoring force of an arc.

Recently, customized orthodontic techniques to design a position of brackets or a shape of a wire using software of a computer after making a setup model of a patient's condition of the teeth have been disclosed.

There are lots of patented techniques related with customized orthodontics by 3M INNOVATIVE PROPERTIES COMPANY, H32 COMPANY, Guangzhou Riton Biomaterial Company, and so on.

As an example, EP Patent No. 2736444 by 3M INNOVATIVE PROPERTIES COMPANY discloses orthodontic archwires with reduced interference and related methods to acquire a shape of an arc corresponding to the location of a patient's teeth and manufacture a customized wire for lingual orthodontics having a plurality of segments.

In EP Patent No. 2736444, when a location and an angle to bend is inputted, an existing rectangular wire is bent by a bending device 1 such that a customized wire is manufactured.

Such a conventional art can provide an accurate control of torque and in-out according to the patient's teeth condition. However, in fact, the conventional art has several disadvantages in that it is caused by the manufacturing method of the conventional rectangular wires and in that it is difficult to secure sufficient accuracy due to an inherent limit in the bending process.

According to the conventional art, the rectangular wire is manufactured by drawing, extruding or rolling a round wire or the like.

However, such a manufacturing process cannot provide a sufficient accuracy due to a large tolerance of the rectangular wire. Especially, edge portions of the rectangular wire does not have an ideal right-angled shape but has a minutely round shape.

Therefore, when the rectangular wire is ligated to slots of brackets, play gets bigger, and it is a growing problem in the case of customized orthodontic appliances requiring accuracy.

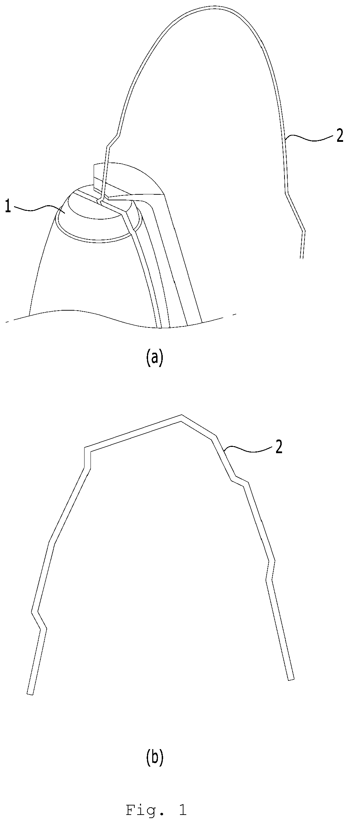

Moreover, as illustrated in FIG. 1(A), when the rectangular wire is bent, in fact, it cannot maintain the bent state at a correct angle in an intended position due to its elasticity.

Particularly, a wire made of nithinol, which is used commonly for orthodontic treatment, is not accurately bent as intended if it is not heated at high temperature, because it tends to return to its original condition.

In the meantime, FIG. 1(B) illustrates a customized rectangular wire manufactured by such a conventional art.

Such a rectangular wire has a plurality of bending points due to the nature of the manufacturing process, and right and left sections from each bending point have the shape close to a straight line.

Because the positions of the slots of the brackets are crooked according to the patient's teeth condition, the bending points are formed at the section between the brackets in order to ligate the wire to the slots of the brackets.

However, because an interval between the brackets is narrow if an angle between the teeth is large at the early stage of the orthodontic treatment, it is not easy to bend the wire. In fact, the customized wire manufactured by the conventional art has a disadvantage in that orthodontic traction in the section between a canine tooth having lots of stepped portions and the first premolar tooth is not achieved smoothly.

### [Disclosure]

### [Technical Problem]

Accordingly, the present invention has been made in an effort to solve the above-mentioned problems occurring in the prior arts, and it is an object of the present invention to provide a method of manufacturing a customized orthodontic square wire satisfying the precise standard.

It is another object of the present invention to provide a method of manufacturing a customized orthodontic square wire, from which a bending step is omitted in order to prevent generation of an error in the manufacturing process.

It is a further object of the present invention to provide a method of manufacturing a customized orthodontic square wire, which has fluent curves without any bending point and has a sectional structure and a cross-sectional area of at least a section different from those of other sections so as to have characteristics that are consistent with its intended use.

### [Technical Solution]

To achieve the above objects, the present invention provides a method of manufacturing a customized orthodontic square wire including the steps of:
generating a setup model in which teeth of a patient are rearranged to a normal position;
determining positions of brackets on the setup model;
generating a reference line to connect slots of the determined brackets;
generating data for cutting and grinding work using the generated reference line; and
cutting and grinding a material using the data for cutting and grinding work of the generated reference line to manufacture a square wire.

In this instance, the reference line has a curve shape passing the slots of the brackets without any bending point.

In detail, slot sections maintain a straight form, but sections between the slots have fluent curves.

Particularly, if a stepped interval between neighboring teeth is large, there may be a fluent curve section without any bending point.

In the meantime, in the step of cutting and grinding, the square wire may be manufactured by cutting and grinding a plate made of titanium 64 or 17-4 stainless steel alloy through electric discharge machining (EDM) or laser cutting.

In this instance, the plate has a thickness equal to the height of the slot of the bracket, for instance, has a uniform thickness of 0.018 inches or less.

In another aspect of the present invention, to achieve the above objects, the present invention provides customized orthodontic square wire manufactured by the above-mentioned method.

In this instance, at least a section of the square wire has a curve shape without any bending point, and preferably, cross sections of all sections of the square wire maintain a rectangular form. However, it is for the sake of convenience in manufacturing and the shape of the cross section is not limited to the rectangular form.

In the meantime, at least a section of the square wire has a cross section area different from those of the other sections. A cross section between the anterior teeth section and the posterior teeth section may be different, or a cross section between a slot-ligated portion and a bracket may be different.

Additionally, the square wire may include a loop, a hook or a stop which is formed integrally with the square wire.

### [Advantageous Effects]

According to embodiments of the present invention, the method of manufacturing a customized orthodontic square wire can manufacture a customized orthodontic square wire with a sufficient accuracy by removing accuracy deteriorating factors in a square wire manufacturing process. Especially, according to the method, a square wire which does not generate play due to a small tolerance when it is ligated to the slots of the brackets.

Moreover, the method of manufacturing a customized orthodontic square wire can manufacture a customized orthodontic square wire having characteristics necessary for use purposes by designing the square wire in such a way that a cross section between the anterior teeth section and the posterior teeth section may be different, or a cross section between a slot-ligated portion and a bracket may be different.

### [Description of Drawings]

FIG. 1 is a view showing a conventional method of bending a wire.

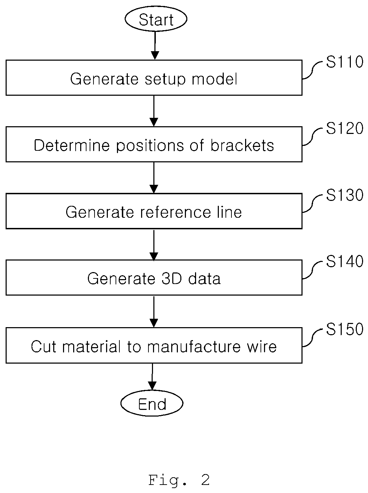

FIG. 2 is a flow chart showing a method of manufacturing a customized orthodontic square wire according to a preferred embodiment of the present invention.
FIG. 3 is a view showing a process of making a setup model, attaching brackets to the setup model, and scanning the positions of the portions where the brackets are attached.
FIG. 4 is a view showing a process of designing the positions of the brackets and the shape of a wire using a computer software.
FIG. 5 is a view illustrating a reference line of a curve shape connecting bracket slots.
FIG. 6 is a view showing an example of a square wire manufactured by the method of manufacturing the customized orthodontic square wire according to the preferred embodiment of the present invention.
FIG. 7 is a view illustrating a modification that a loop, a hook and a stop are formed integrally with the wire.

### [Mode for Invention]

Hereinafter, preferred embodiments of the present invention will now be described in detail with reference to the attached drawings, in which like reference numbers denote corresponding parts throughout the drawings.

The terms "comprising" and "including" in the discussion directed to the present invention and the claims are used in an open-ended fashion and thus should be interrupted to mean "including", but not limited thereto.

Now, referring to the attached drawings, a method of manufacturing a customized orthodontic square wire according to a preferred embodiment of the present invention will be described in detail.

First, make a dental setup model 10 for a patient (S110).

Making a dental setup model 10 is generally carried out for customized orthodontic treatment. The dental setup model 10 may be made by cutting a patient's teeth model with maxillary or mandibular malocclusion and realigning the teeth model at an ideal position.

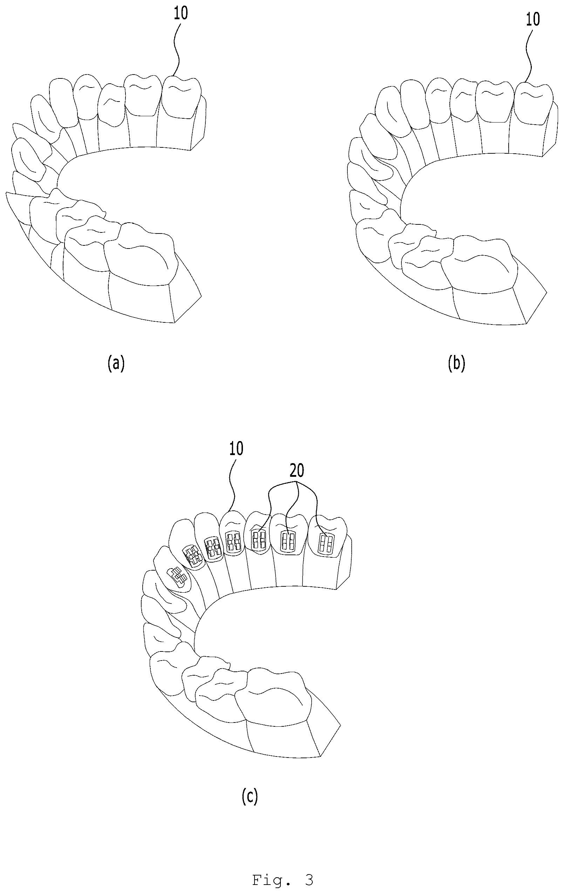

The setup model 10 may be made using computer graphics using a 3D scanner 40, but it is preferable that the setup model 10 be made manually by cutting a malocclusion model as illustrated in FIG. 3(A).

As illustrated in FIG. 3(B), when the setup model 10 is prepared, determine attachment positions of brackets 20 using the setup model 10 (S120).

FIG. 3(C) illustrates a state where the brackets 20 are attached to the lingual surface of the teeth.

As illustrated in FIG. 3(C), after all of the brackets 20 are attached to the setup model 10 of the teeth, the 3D scanner 40 scans it in order to grasp coordinates of the brackets 20 and coordinates of slots of the brackets 20.

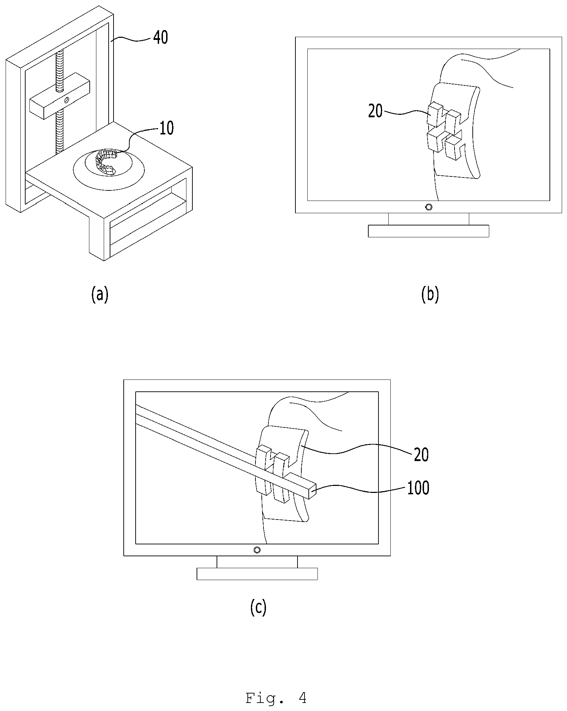

Alternatively, after the 3D scanner 40 scans the setup model 10 and indicates it on the computer software as illustrated in FIG. 4(A), the attachment positions of the brackets 20 may be determined as illustrated in FIG. 4(B).

After that, when the positions of the brackets 20 on the setup model 10 are all determined, generate a reference line 30 to connect the slots of the brackets 20 using the computer software (S130).

The conventional customized square wire has been manufactured through the steps of determining positions of a plurality of bending points on a wire, determining bending angles of the bending points, and then, bending the wire as illustrated in FIG. 1.

However, because such a bending step is omitted from the manufacturing process of the customized square wire 100 according to the present invention, the square wire 100 having a curve shape without any bending point can be manufactured.

The customized square wire 100 is manufactured according to the shape of the reference line 30 formed as described later.

For instance, a curve line passing the slots of the brackets 20 is automatically generated using a Bezier curve in such a way that control points are set at both sides of each slot to maintain a straight form at slot sections and a distance between the control points is short not to form bending points at sections between the slots, such that the reference line 30 of a smooth curve shape can be obtained.

Of course, if necessary, the sections between the slots may be bent at a large angle to have bending points, but it can show orthodontic traction smoother than that of the square wire 100 with the curve shape.

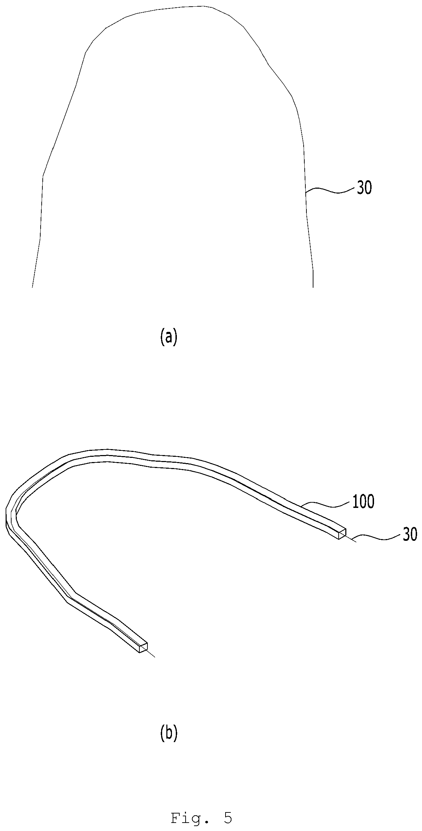

As a result, as illustrated in FIG. 1(B), the conventional customized square wire 100 has lots of the bending points and the shape close to a straight line in the sections between the bending points. However, the customized square wire 100 manufactured by the present invention, as illustrated in FIG. 5(B), does not have bending points formed at a predetermined angle but has a smooth curve shape in all sections.

In the meantime, when the reference line 30 of the curve shape is formed, generate data for cutting and grinding using the reference line 30 (S140).

For instance, if a plate with thickness of 0.018 inches is used for cutting and grinding work, a data of a long rectangular shape bent along the reference line 30 of the curve shape can be obtained.

In this instance, the data for cutting and grinding work may be designed in such a way that a cross section of at least one section is different from those of other sections.

In the case of bracket slots with **018 size,** the generated data for cutting and grinding work at the bracket slot ligated portions must be set to have height which is equal to or smaller than 0.018 inches.

However, the data may be designed to have width varied according to sections.

A loop 101, a hook 102 or a stop 103 may be formed integrally with the square wire 100 by setting different cross sections of sections or a different cross section of a certain section according to use purposes of the wire, namely, according to a retraction wire or a finishing wire.

On the assumption that a plate with a uniform thickness is machined, it was described that the data for cutting and grinding work is generated in the form of a 2D graphic data, but the data for cutting and grinding work may be generated in the form of a 3D graphic data to have a three-dimensional figure.

In the meantime, when the data for cutting and grinding work is generated, cut a material using the data to manufacture a square wire 100 (S150).

Therefore, in the S150 step, the square wire 100 is manufactured, preferably, by electric discharge machining (EDM) or laser cutting.

Meanwhile, during the electric discharge machining or laser cutting, because the degree of accuracy may be deteriorated greatly if the mechanical property of the machined surface is changed, it is preferable to use a material with properties to endure such process.

A wire made of stainless steel alloy is mainly used as an orthodontic wire. 304 stainless steel alloy which has been used as a material for the conventional orthodontic wire is suitable for drawing or rolling work, but cannot maintain the mechanical properties of the wire during the electric discharge machining or laser cutting.

In order to solve such a problem, titanium 64 or 17-4 stainless steel alloy which is low in harmfulness to the human body and is appropriate for an orthodontic wire may be used.

In the S150 step, preferably, the square wire 100 is manufactured through electric discharge machining or laser cutting of a plate made of titanium 64 or 17-4 stainless steel alloy.

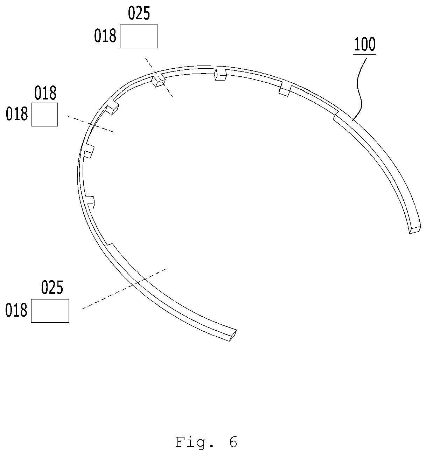

FIG. 6 illustrates the shape of the square wire 100 manufactured by the method of manufacturing a customized orthodontic square wire according to the present invention.

In FIG. 6, the square wire 100 has a fluent curve, namely, an arch-shaped curve.

That is, the square wire 100 is made to have a curved shape naturally passing the bracket slots even though it is not bent.

Furthermore, referring to FIG. 6, at least a section of the square wire 100 has a different cross section from those of other sections.

The conventional square wires 100 manufactured by drawing or rolling have the same cross section in all sections, but the square wire 100 illustrated in FIG. 6 is designed to have different width and height of the cross section in each section, such that the square wire 100 can have properties suitable for use purposes.

For instance, if the square wire is to be used as a retraction wire for lingual orthodontic treatment, as illustrated in FIG. 6, the bracket-ligated portion of the anterior teeth section has the same size as the bracket slot so as to be tightly ligated to the bracket slot, and in this instance, the section between the brackets 20 is made to be thin in cross section, such that sufficient elasticity can be maintained. On the other hand, a posterior teeth section maintains uniform cross section so as to facilitate retraction of the anterior teeth.

Alternatively, the bracket-ligated portions of the entire sections are designed to have the same size as the bracket slots, and in this instance, the cross section of the section between the brackets 20 is made to be thin so as to secure suitability as a finishing wire.

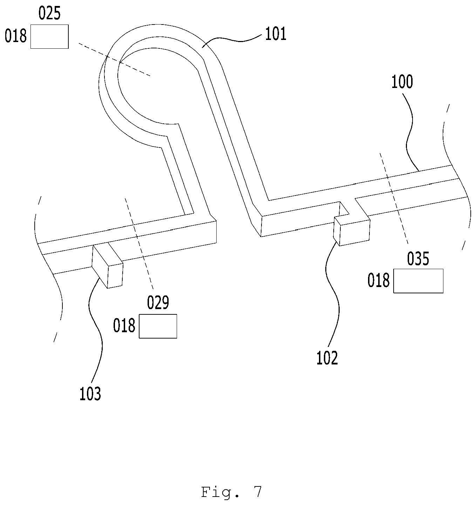

In the meantime, FIG. 7 shows a modification of the square wire 100 manufactured by the method of manufacturing a customized orthodontic square wire according to the preferred embodiment of the present invention.

As illustrated in FIG. 7, the square wire 100 includes a loop 101, a hook 102 or a stop 103 which is formed integrally with the square wire 100.

According to the conventional art, the hook 102 is attached to one side of the wire, and then, the wire is bent to make the loop 101 manually. However, according to the present invention, the square wire 100 on which the loop 101, the hook 102 or the stop 103 is formed integrally can be easily manufactured using the method of manufacturing a customized orthodontic square wire.

According to the square wire 100 illustrated in FIG. 7, the cross section of a section where the loop 101 or the hook 102 is formed is different from those of other sections. When the plate is cut, the loop 101, the hook 102 or the stop 103 can be formed integrally.

Meanwhile, besides the above, in order to prevent the wire 100 from being separated from the slots of the brackets during traction, the square wire 100 further includes a stop 103 which protrudes to a predetermined thickness from the square wire 100.

Except that the loop 101 or the hook 102 are formed integrally with the square wire 100, the loop 101 or the hook 102 may have the same shape of the loop 101 or the hook 102 of the conventional art.

As described above, the technical thoughts of the present invention have been described.

It is to be appreciated that those skilled in the art can change or modify the exemplary embodiments from the above description. Although it is not clearly illustrated or described herein, it is to be appreciated that those skilled in the art can change or modify the exemplary embodiments from the above description without departing from the scope and spirit of the present invention, and such changes or modifications belong to the scope of the present invention. While the present invention has been described with reference to the particular illustrative embodiments, it is not to be restricted by the exemplary embodiments but only by the appended claims.

## Claims

1. A method for manufacturing a customized orthodontic square wire comprising the steps of:
generating a setup model in which teeth of a patient are rearranged to a normal position;
determining positions of brackets on the setup model;
generating a reference line to connect slots of the determined brackets;
generating data for cutting and grinding work using the generated reference line; and
cutting and grinding a material using the data for cutting and grinding work of the generated reference line to manufacture a square wire.

2. The method according to claim 1, wherein in the step of generating the reference line, the reference line has a curve shape passing the slots of the brackets without any bending point.

3. The method according to claim 1, wherein in the step of generating data for cutting and grinding work, the data for cutting and grinding work has a rectangular cross section having a different cross section in at least a section.

4. The method according to claim 1, wherein in the step of generating data for cutting and grinding work, the data for cutting and grinding work is generated such that at least one of a loop, a hook and a stop is formed integrally with the square wire.

5. The method according to claim 1, wherein in the step of cutting and grinding, the square wire is machined by electric discharge machining (EDM) or laser cutting.

6. The method according to claim 1, wherein in the step of cutting and grinding, the square wire is manufactured by cutting and grinding a plate made of titanium 64 or 17-4 stainless steel alloy.

7. A customized orthodontic square wire manufactured by a method for manufacturing a customized orthodontic square wire comprising the steps of:
generating a setup model in which teeth of a patient are rearranged to a normal position;
determining positions of brackets on the setup model;
generating a reference line to connect slots of the determined brackets;
generating data for cutting and grinding work using the generated reference line; and
cutting and grinding a material using the data for cutting and grinding work of the generated reference line to manufacture a square wire.

8. The customized orthodontic square wire according to claim 7, wherein the square wire has a curve shape without any bending point, is square in cross section, and has a structure that a cross section area in at least a section is different from those of other section.
